# EUROPEAN PATENT SPECIFICATION

(11) **EP 3 604 356 B1**
(45) Date of publication and mention of the grant of the patent: **02.08.2023**
(21) Application number: 18775158.1
(22) Date of filing: 13.03.2018
(51) Int. Cl.: C08C 19/02, C08C 19/04, C08C 19/28, C08F 236/10

(54) **MODIFIED HYDROCARBON RESIN**
MODIFIZIERTES KOHLENWASSERSTOFFHARZ
RÉSINE HYDROCARBONÉE MODIFIÉE

(30) Priority: 30.03.2017 JP 2017067616
(43) Date of publication of application: 05.02.2020
(73) Proprietor: Zeon Corporation, Tokyo 100-8246 (JP)
(72) Inventor: MARUYAMA, Yoshifumi, Tokyo 100-8246 (JP); KAMEYAMA, Ryoji, Tokyo 100-8246 (JP); HASHIMOTO, Sadaharu, Tokyo 100-8246 (JP)
(74) Representative: Beckmann, Claus
(86) International application number: PCT/JP2018/009711
(87) International publication number: WO 2018/180462

(56) References cited:
- EP-A1- 0 074 273
- EP-A1- 1 295 926
- WO-A1-2015/125802
- WO-A1-2017/057500
- WO-A1-2017/171025
- JP-A- H0 718 015
- JP-A- S58 164 610
- JP-A- S58 204 003
- JP-A- 2004 082 469
- JP-A- 2006 206 850
- JP-A- 2014 198 806
- DATABASE WPI Week 199138 Thomson Scientific, London, GB; AN 1991-278329 XP002800456, & JP H03 185013 A (MITSUI PETROCHEM IND CO LTD) 13 August 1991 (1991-08-13)

## Description

### Technical Field

The present invention relates to a modified hydrocarbon resin with low odor, excellent color tone, and excellent heat resistant hue stability.

### Background Art

Hydrocarbon resins have been widely utilized in products such as a tackifier, an adhesive, a paint, and a polymer modifier. However, general hydrocarbon resins have odor, and also color tones thereof are not excellent, such as taking on a dark color; on top of that, since the color tones would be worse if they are heated, they have been inappropriate depending on applications. Accordingly, various attempts have been made in order to improve the odor and color tone.

Also, in recent years, a modified hydrocarbon resin obtained by utilizing an acid and an acid anhydride in a hydrocarbon resin has been focused since it can provide novel characteristics (such as water resistant adhesiveness) not included in conventional hydrocarbon resins.

For example, Patent Literature 1 discloses a modified hydrocarbon resin obtained by carrying out the graft copolymerization of a hydrocarbon resin prepared by copolymerizing 100 parts by weight vinylaromatic hydrocarbon with 5-100 parts by weight hydrocarbon component mainly consisting of a 4-5C unsaturated hydrocarbon, with at least one kind selected from a monoolefindicarboxylic acid and anhydride thereof, wherein the modified hydrocarbon resin has 1 to 150 (mg KOH/g) acid value and 300 to 5000 weight average molecular weight. However, since the said modified hydrocarbon resin has large amount of copolymerized vinylaromatic hydrocarbon, the odor derived from the residual monomer has been a problem.

Also, Patent Literature 2 discloses an acid-modified hydrocarbon resin comprising a C5 unsaturated aliphatic hydrocarbon monomer, an isoolefin monomer, and a reaction production such as a dicarboxylic acid or an acid anhydride, wherein the resin has a specific acid value and specific composition ratio. However, the said acid-modified hydrocarbon resin has extremely poor color tone and the odor at a high temperature has been a problem.

JP 2006 206850 A relates to the problem to provide a pressure-sensitive adhesive composition excellent especially in the peel adhesion strength with a polyolefin-based resin article to be adhered and in the balance of initial adhesiveness and holding power, and also in the peel adhesion strength after heating and discoloration resistance, a modified petroleum resin suitable as a tackifier for the pressure-sensitive adhesive composition, and its emulsion. As a solution to the problem, the document describes a modified petroleum resin which comprises 10-95 mass-% of C4-6 olefinic unsaturated hydrocarbon monomer unit, and 5-90 mass-% of C7-11 olefinic unsaturated hydrocarbon monomer unit, and wherein the ratio of isoprene monomer unit in the diolefin monomer unit contained in the total monomer unit is 20-100 mass-%, and which has a softening point of not lower than 30°C and an acid value of 0.1-100 KOH mg/g, and an emulsion which is made from the resin.

JP S58 204003 A relates to the problem to provide a heatfusible traffic paint composition excellent in filler settling resistance, containing, as a consistency-imparting agent, a modified product excellent in heat resistance, color, etc., obtained by graft-copolymerizing an aliphatic hydrocarbon resin comprising specified components with an olefin. As a solution to the problem, the document describes a resin which is prepared by polymerizing 25-75 mol-% of C4-5 linear aliphatic 1,3-conjugated diene with 15-65 mol-% of C4-10 aliphatic internal monoolefin, 0-30 mol-% of C4-5 linear aliphatic terminal monoolefin and 0-5 mol-% of cyclopentadiene. The obtained resin is graft-copolymerized with a C10 or lower unsaturated carboxylic acid or its anhydride or ester to obtain a modified hydrocarbon resin with saponification value of 0.2-50 mgKOH/g, softening point of 80-120 °C, and melt viscosity at 200 °C of 40-300 cP. This resin is used as a consistency-imparting agent to obtain a heatfusible traffic paint composition excellent in film performances.

JP 2014 198806 A relates to the problem to provide a hydrocarbon resin which has an excellent color tone without hydrogenation and which, upon blending into an olefinic thermoplastic elastomer, can provide a hot melt adhesive composition which has a long open time and is excellent in all of color tone, easiness of coating operation, adhesive performance at high temperature, adhesive strength, and resistance to thermal degradation. As a solution to the problem, the document describes a hydrocarbon resin obtained by addition polymerizing a monomer mixture comprising 40 to 60 wt.% of 1,3-pentadiene, 20 to 35 wt.% of an alicyclic monoolefin having 4 to 6 carbon atoms, 5 to 30 wt.% of an acyclic monoolefin having 4 to 8 carbon atoms, 0 to 1 wt.% of an alicyclic diolefin, and 0 to 30 wt.% of other monomers. The hydrocarbon resin has a weight average molecular weight (Mw) of 2000 to 5000 and a Z average molecular weight (Mz) of 3500 to 10500, and a 50 wt.% solution thereof in toluene has a Gardner color number of 3 or less.

### Citation List

### Patent Literatures

Patent Literature 1: Japanese Patent Application Laid-Open (JP-A) No. H7-188352
Patent Literature 2: International Publication No. WO2002/004530

### Summary of Invention

### Technical Problem

The present invention has been made in view of the above circumstances, and a main object thereof is to provide a modified hydrocarbon resin with low odor, excellent color tone, and excellent heat resistant hue stability.

### Solution to Problem

The inventors of the present invention conducted a thorough investigation in order to achieve the object; as the result, they have found out that the modified hydrocarbon resin with low odor, excellent color tone, and excellent heat resistant hue stability may be obtained by further acid-modifying a resin formed by hydrogenating a hydrocarbon resin having a specific composition. The present invention has been completed based on this finding.

Thus, according to the present invention, provided is a modified hydrocarbon resin characterized by being formed by introducing a carboxyl group or an acid anhydride group derived from an unsaturated carboxylic acid or an unsaturated dicarboxylic acid anhydride into a resin formed by hydrogenating a hydrocarbon resin comprising: a 1,3-pentadiene monomeric unit of 20 mass% to 70 mass%; a C₄₋₆ alicyclic monoolefin monomeric unit of 10 mass% to 40 mass%; a C₄₋₈ acyclic monoolefin monomeric unit of 5 mass% to 30 mass%; an alicyclic diolefin monomeric unit of 0 mass% to 1 mass%; and an aromatic monoolefin monomeric unit of 0 mass% to 40 mass%; wherein a degree of hydrogenation of the olefins is within a range of 0.1% to 50%.

In the modified hydrocarbon resin of the present invention, it is preferable that a weight average molecular weight (Mw) is within a range of 1,000 to 4,000; a Z-average molecular weight (Mz) is within a range of 1,500 to 10,000; a ratio (Mz/Mw) of the Z-average molecular weight to the weight-average molecular weight is within a range of 1.5 to 2.5; a Gardner color scale of a toluene solution of 50 mass% is 5 or lower; a softening point is 30°C or more; and an acid value is 0.5 to 20 KOHmg/g.

It is preferable that the unsaturated dicarboxylic acid anhydride is a maleic anhydride.

In the modified hydrocarbon resin of the present invention, it is preferable that a content of the unsaturated carboxylic acid and the unsaturated dicarboxylic acid anhydride unreacted is 3000 ppm or lower.

### Advantageous Effects of Invention

The present invention exhibits an effect of providing a modified hydrocarbon resin with low odor, excellent color tone, and excellent heat resistant hue stability.

### Description of Embodiments

The modified hydrocarbon resin of the present invention is hereinafter explained in details.

The modified hydrocarbon resin of the present invention is formed by introducing a carboxyl group or an acid anhydride group derived from an unsaturated carboxylic acid or an unsaturated dicarboxylic acid anhydride into a resin formed by hydrogenating a hydrocarbon resin comprising: a 1,3-pentadiene monomeric unit of 20 mass% to 70 mass%; a C₄₋₆ alicyclic monoolefin monomeric unit of 10 mass% to 40 mass%; a C₄₋₈ acyclic monoolefin monomeric unit of 5 mass% to 30 mass%; an alicyclic diolefin monomeric unit of 0 mass% to 1 mass%; and an aromatic monoolefin monomeric unit of 0 mass% to 40 mass%; wherein a degree of hydrogenation of the olefins is within a range of 0.1% to 50%.

The modified hydrocarbon resin of the present invention is the one further acid-modifying a resin formed by hydrogenating a hydrocarbon resin. Hereinafter, pre-acid-modified and pre-hydrogenated hydrocarbon resin (hereinafter referred to as simply a pre-modified resin in some cases), and a modified hydrocarbon resin obtained by further acid-modifying a resin formed by hydrogenating the pre-modified resin are explained in details.

### 1. Pre-modified resin

The pre-modified resin is a raw material resin before acid-modification and before hydrogenation, the resin includes: a 1,3-pentadiene monomeric unit of 20 mass% to 70 mass%; a C₄₋₆ alicyclic monoolefin monomeric unit of 10 mass% to 40 mass%; a C₄₋₈ acyclic monoolefin monomeric unit of 5 mass% to 30 mass%; an alicyclic diolefin monomeric unit of 0 mass% to 1 mass%; and an aromatic monoolefin monomeric unit of 0 mass% to 40 mass%.

Incidentally, the content ratio of the monomeric unit is in the same manner in the modified hydrocarbon resin, and the suitable range of the said content ratio is the same as that of the pre-modified resin.

The content of the 1,3-pentadiene monomeric unit in the pre-modified resin is within a range of 20 mass% to 70 mass%, preferably within a range of 25 mass% to 65 mass%, and above all, preferably within a range of 30 mass% to 60 mass%, and in particular, preferably within a range of 35 mass% to 55 mass%. If the 1,3-pentadiene in the pre-modified resin is too little, in the case of using the modified hydrocarbon resin for materials such as a tackifier and an adhesive, the resin would be inferior in heat deterioration resistance. On the other hand, if the 1,3-pentadiene in the pre-modified resin is too much, in the case of using the modified hydrocarbon resin for materials such as a tackifier and an adhesive, the resin would have short open time and low adhesiveness, and be inferior in coating easiness.

Here, the open time is the time allowed for adhesion which is from when a tackifier or an adhesive is pasted on an adherent to when it is pasted together; the time during which the adhesion can be maintained while the tackifier or the adhesive is not fixed before it is tacked or adhered. In general, from the viewpoint of properties such as workability, the open time is preferably long.

Incidentally, there are no particular limitations on the cis/trans isomeric ratio in the 1,3-pentadiene, and it may be an arbitrary ratio.

The C₄₋₆ alicyclic monoolefin is a C₄₋₆ hydrocarbon compound having one ethyleny unsaturated bond and a nonaromatic ring structure in its molecule structure.
Specific examples of the C₄₋₆ alicyclic monoolefin may include cyclobutene, cyclopentene, cyclohexene, methylcyclobutene, and methylcyclopentene.

The content of the C₄₋₆ alicyclic monoolefin monomeric unit in the pre-modified resin is within a range of 10 mass% to 40 mass%, preferably within a range of 15 mass% to 40 mass%, and above all, preferably within a range of 19 mass% to 40 mass%, and in particular, preferably within a range of 23 mass% to 40 mass%. If the C₄₋₆ alicyclic monoolefin in the pre-modified resin is too little, in the case of using the modified hydrocarbon resin for materials such as a tackifier and an adhesive, the resin would have short open time and low adhesiveness, and be inferior in coating easiness. On the other hand, if the C₄₋₆ alicyclic monoolefin in the pre-modified resin is too much, in the case of using the modified hydrocarbon resin for materials such as a tackifier and an adhesive, the resin would be inferior in heat deterioration resistance.

Incidentally, there are no particular limitations on the ratio of each compound that corresponds to the C₄₋₆ alicyclic monoolefin therein, and it may be an arbitrary ratio; however, it is preferable that at least cyclopentene is included, and the ratio of the cyclopentene occupied in the C₄₋₆ alicyclic monoolefin is preferably 50 mass% or more.

The C₄₋₈ acyclic monoolefin is a C₄₋₈ chain-shaped hydrocarbon compound having one ethyleny unsaturated bond but not having a ring structure in its molecule structure. Specific examples of the C₄₋₈ acyclic monoolefin may include butenes such as 1-butene, 2-butene, and isobutylene (2-methylpropene); pentenes such as 1-pentene, 2-pentene, 2-methyl-1-butene, 3-methyl-1-butene, and 2-methyl-2-butene; hexenes such as 1-hexene, 2-hexene, and 2-methyl-1-pentene; heptenes such as 1-heptene, 2-heptene, and 2-methyl-1-hexene; octenes such as 1-octene, 2-octene, 2-methyl-1-heptene, and di-isobutylene (2,4,4-trimethyl-1-pentene and 2,4,4-trimethyl-2-pentene).

The content of the C₄₋₈ acyclic monoolefin monomeric unit in the pre-modified resin is within a range of 5 mass% to 30 mass%, preferably within a range of 5 mass% to 29 mass%, and above all, preferably within a range of 5 mass% to 28 mass%, and in particular, preferably within a range of 5 mass% to 27 mass%. If the C₄₋₈ acyclic monoolefin in the pre-modified resin is too little, in the case of using the modified hydrocarbon resin for materials such as a tackifier and an adhesive, the resin would have short open time and low adhesiveness, and be inferior in coating easiness. On the other hand, if the C₄₋₈ acyclic monoolefin in the pre-modified resin is too much, in the case of using the modified hydrocarbon resin for materials such as a tackifier and an adhesive, the resin would be inferior in heat deterioration resistance.

Incidentally, there are no particular limitations on the ratio of each compound (including isomers) that corresponds to the C₄₋₈ acyclic monoolefin therein, and it may be an arbitrary ratio; however, it is preferable to include at least one kind selected from the group consisting of at least 2-methyl-2-butene, isobutylene, and di-isobutylene, and it is more preferable that the ratio occupied by the total amount of 2-methyl-2-butene, isobutylene, and di-isobutylene in the C₄₋₈ acyclic monoolefin is 50 mass% or more.

The pre-modified resin may include an alicyclic diolefin as its raw material. The alicyclic diolefin is a hydrocarbon compound having two or more ethyleny unsaturated bonds and a non-aromatic ring structure in its molecule structure. Specific examples of the alicyclic diolefin may include cyclopentadiene, a multimer of cyclopentadiene such as dicyclopentadiene, methylcyclopentadiene, and a multimer of methylcyclopentadiene.

The content of the alicyclic diolefin monomeric unit in the pre-modified resin is within a range of 0 mass% to 1 mass%, preferably within a range of 0 mass% to 0.8 mass%, and above all, preferably within a range of 0 mass% to 0.6 mass%, and in particular, preferably within a range of 0 mass% to 0.4 mass%. The content is in the above described range and thus the odor of the resin may be low. Also, if the alicyclic diolefin in the pre-modified resin is too much, in the case of using the modified hydrocarbon resin for materials such as a tackifier and an adhesive, the resin would have short open time and low adhesiveness, and be inferior in coating easiness.

The pre-modified resin may include an aromatic monoolefin as its raw material. The aromatic monoolefin is an aromatic compound having one ethyleny unsaturated bond in its molecule structure. Specific examples of the aromatic monoolefin may include styrene, α-methylstyrene, vinyltoluene, indene, and coumarone.

The content of the aromatic monoolefin monomeric unit in the pre-modified resin is within a range of 0 mass% to 40 mass%, preferably within a range of 0 mass% to 38 mass%, and above all, preferably within a range of 0 mass% to 36 mass%, and in particular, preferably within a range of 0 mass% to 34 mass%. The content is in the above described range and thus the odor of the resin may be low and the color tone may be excellent.

Incidentally, there are no particular limitations on the ratio of each compound (including isomers) that corresponds to the aromatic monoolefin therein, and it may be an arbitrary ratio; however, it is preferable that at least styrene is included, and the ratio of the styrene occupied in the aromatic monoolefin is preferably 50 mass% or more.

The pre-modified resin may include an additional monomeric unit other than the 1,3-pentadiene monomeric unit, the C₄₋₆ alicyclic monoolefin monomeric unit, the C₄₋₈ acyclic monoolefin monomeric unit, the alicyclic diolefin monomeric unit, and the aromatic monoolefin monomeric unit, to the extent that the effects of the present invention can be obtained.

There are no particular limitations on an additional monomer used to configure such an additional monomeric unit, as long as it is a compound having addition polymerizability that allows addition polymerization with a substance such as the 1,3-pentadiene, and is a compound other than the aforementioned monomeric units. Examples of the additional monomer may include a C₄₋₆ unsaturated hydrocarbon other than 1,3-pentadiene such as 1,3-butadiene, 1,2-butadiene, isoprene, 1,3-hexadiene, and 1,4-pentadiene; C₇ or more alicyclic monoolefin such as cycloheptene; and acyclic monoolefin other than C₄₋₈ such as ethylene, propylene, and nonene.

The content of the additional monomeric unit in the pre-modified resin is to the extent that allows the effects of present invention to be obtained; in specific, the content is usually within a range of 0 mass% to 30 mass%, preferably within a range of 0 mass% to 25 mass%, and more preferably within a range of 0 mass% to 20 mass%. If the content is too much, in the case of using the modified hydrocarbon resin for materials such as a tackifier and an adhesive, the resin would have short open time and adhesiveness may be degraded in some cases.

There are no particular limitations on a method to produce the pre-modified resin as long as a polymerizable component (monomer mixture A) having a monomer capable of configuring the above described monomeric unit is suitably addition polymerized. For example, the pre-modified resin can be obtained by addition polymerization using Friedel-Crafts cation polymerization catalyst.

Examples of a method suitably used to produce the pre-modified resin may include a method comprising a polymerization step of polymerizing a monomer mixture A including a 1,3-pentadiene of 20 mass% to 70 mass%, a C₄₋₆ alicyclic monoolefin of 10 mass% to 40 mass%, a C₄₋₈ acyclic monoolefin of 5 mass% to 30 mass%, an alicyclic diolefin of 0 mass% to 1 mass%, and an aromatic monoolefin of 0 mass% to 40 mass%, by combining the following halogenated aluminum (A) with halogenated hydrocarbon (B) selected from the group consisting of halogenated hydrocarbon (B1) in which a tertiary carbon atom is connected to a halogen atom and halogenated hydrocarbon (B2) in which a carbon atom adjacent to a carbon-carbon unsaturated bond is connected to a halogen atom, to be a polymerization catalyst.

Specific examples of the halogenated aluminum (A) may include aluminum chloride (AlCl₃) and aluminum bromide (AlBr₃). Among them, from the viewpoints such as versatility, aluminum chloride is suitably used.

There are no particular limitations on the amount of use of halogenated aluminum (A); however, the amount of use to 100 parts by mass of the polymerizable component (monomer mixture A) is preferably within a range of 0.05 parts by mass to 10 parts by mass, and more preferably within a range of 0.1 parts by mass to 5 parts by mass.

The activation of the polymerization catalyst becomes extremely excellent when the halogenated hydrocarbon (B) and the halogenated aluminum (A) are used together.

Specific examples of the halogenated hydrocarbon (B1) in which a tertiary carbon atom is connected to a halogen atom may include t-butyl chloride, t-butyl bromide, 2-chloro-2-methylbutane, and triphenylmethyl chloride. Among these, t-butyl chloride is particularly suitably used for the point being excellent in balance of activity and easiness of handling.

Examples of the unsaturated bond in the halogenated hydrocarbon (B2) in which a carbon atom adjacent to a carbon-carbon unsaturated bond is connected to a halogen atom may include a carbon-carbon double bond and a carbon-carbon triple bond, which includes a carbon-carbon conjugated double bond such as in an aromatic ring. Specific examples of such a compound may include benzyl chloride, benzyl bromide, (1-chloroethyl)benzene, allyl chloride, 3-chloro-1-propyne, 3-chloro-1-butene, 3-chloro-1-butyne, and cinnamon chloride. Among these, benzyl chloride is particularly suitably used for the point being excellent in balance of activity and easiness of handling.

Incidentally, the halogenated hydrocarbon (B) may be used in one kind, or two or more kinds thereof may be used in combination.

The amount of use of the halogenated hydrocarbon (B) is, at a molar ratio to the halogenated aluminum (A), preferably within a range of 0.05 to 50, and more preferably within a range of 0.1 to 10.

There are no particular limitations on the order of adding each component of the monomer mixture and polymerization catalyst to a polymerization reactor when performing a polymerization reaction, and they may be added in the arbitrary order; however, from the viewpoint of obtaining the modified hydrocarbon resin with more excellent hue favorably controlling the polymerization reaction, it is preferable that the monomer mixture and a part of the component of the polymerization catalyst are added to the polymerization reactor to initiate the polymerization reaction and then the rest of the polymerization catalyst are added to the polymerization reactor.

In the production of the pre-modified resin, it is preferable that the halogenated aluminum (A) is mixed with the alicyclic monoolefin first. The contact treatment of the halogenated aluminum (A) and the alicyclic monoolefin allows a pre-modified resin with excellent hue to be obtained while inhibiting the generation of gel.

The amount of the alicyclic monoolefin mixed with the halogenated aluminum (A) is preferably at least five times (mass ratio) of the amount of the halogenated aluminum (A). If the amount of the alicyclic monoolefin is too little, there is a risk that prevention of gel generation and the effect of hue improvement would be insufficient. The mass ratio of the alicyclic monoolefin and the halogenated aluminum (A) is preferably 5 : 1 to 120 : 1, more preferably 10 : 1 to 100 : 1, and further preferably 15 : 1 to 80 : 1. If the alicyclic monoolefin is excessively used much exceeding these ratio, there are risks that the catalyst activation would be degraded and the polymerization would not proceed sufficiently.

There are no particular limitations on the order of putting the halogenated aluminum (A) and the alicyclic monoolefin; the halogenated aluminum (A) may be put into the alicyclic monoolefin, and vice versa, the alicyclic monoolefin may be put into the halogenated aluminum (A). Since mixing thereof usually generates heat, an appropriate diluent may be also used. As the diluent, the solvent later described may be used.

It is preferable that, after a mixture M of the halogenated aluminum (A) and the alicyclic monoolefin is prepared as described above, at least the mixture "a" including the 1,3-pentadiene and the acyclic monoolefin is mixed with the mixture M. The mixture "a" may include alicyclic diolefin.

There are no particular limitations on the method for preparing the mixture "a"; the intended mixture "a" may be obtained by mixing each of pure compound, and the intended mixture "a" may be obtained by using a mixture including the intended monomer, such that derives from the fraction of a naphtha cracker. For example, in order to blend a substance such as the 1,3-pentadiene in the mixture "a", a C5 fraction after extracting isoprene and cyclopentadiene (including the multimers thereof) can be suitably used.

It is preferable that the halogenated hydrocarbon (B) is further mixed along with the mixture "a" and the mixture M. There are no particular limitations on the order of putting these three.

It is preferable that the polymerization reaction is conducted by adding a solvent to the polymerization reaction system from the viewpoint of controlling the polymerization reaction well. There are no particular limitations on the kind of the solvent as long as it does not inhibit the polymerization reaction; however, saturated aliphatic hydrocarbon or aromatic hydrocarbon is suitable. Examples of the saturated aliphatic hydrocarbon used as the solvent may include C5-10 chain-shaped saturated aliphatic hydrocarbon such as n-pentane, n-hexane, 2-methylpentane, 3-methylpentane, n-heptane, 2-methylhexane, 3-methylhexane, 3-ethylpentane, 2,2-dimethylpentane, 2,3-dimethylpentane, 2,4-dimethylpentane, 3,3-dimethylpentane, 2,2,3-trimethylbutane, and 2,2,4-trimethylpentan; and a cyclic saturated aliphatic hydrocarbon in the range of C5-10 such as cyclopentane, cyclohexane, cycloheptane, and cyclooctane. Examples of the aromatic hydrocarbon used as the solvent may include aromatic hydrocarbon in the range of C6-10 such as benzene, toluene, and xylene. The solvent may be used one kind alone, and may be used as a mixture solvent of two kinds or more. There are no particular limitations on the amount of use of the solvent; however, to 100 parts by mass of the polymerizable component (the monomer mixture A), the amount of use is preferably within a range of 10 parts by mass to 1,000 parts by mass, and more preferably within a range of 50 parts by mass to 500 parts by mass. Incidentally, for example, a mixture of an addition polymerizable component and a non-addition polymerizable component such as a mixture of cyclopentane and cyclopentene derived from the C5 fraction may be added to the polymerization reaction system; the addition polymerizable component may be used as the component of the monomer mixture, and the non-addition polymerizable component may be used as the solvent.

There are no particular limitations on a polymerization temperature for performing the polymerization reaction; however, the temperature is preferably within a range of -20°C to 100°C, and preferably within a range of 10°C to 70°C. If the polymerization temperature is too low, there is a possibility that the polymerization activity would be degraded to deteriorate the productivity, and if the polymerization temperature is too high, there is a risk that the hue of the pre-modified resin to be obtained would be inferior. The pressure for performing the polymerization reaction may be under an atmospheric pressure, and may be under increased pressure. The time for the polymerization reaction may be appropriately selected; however, it is usually selected within a range of 10 minutes to 12 hours, and preferably selected within a range of 30 minutes to 6 hours.

The polymerization reaction can be terminated by adding a polymerization terminator such as methanol, a sodium hydroxide aqueous solution, and an ammonium solution to the polymerization reaction system at the point the intended polymerization conversion rate is obtained.

The method for producing the pre-modified resin comprises at least the polymerization step, but may comprise an additional step as required.

Examples of the additional step may include a catalyst residue removing step after the polymerization step, wherein a catalyst residue insoluble with the solvent generated when the polymerization catalyst is inactivated by the addition of the polymerization terminator in the polymerization reaction, is removed by filtrating thereof, and a collecting step after the termination of the polymerization reaction in the polymerization step, wherein unreacted monomer and solvent are removed, the oligomer component with low molecular amount is removed by a method such as steam distillation, and cooling thereof to obtain the pre-modified resin in a solid state.

Also, the additional step may include a contact treatment step after the catalyst residue removing step and before the collecting step, wherein a catalyst residue removed mixture after removing the catalyst residue insoluble with the solvent is made contact with an adsorbent to obtain an adsorbent treatment mixture. The contact treatment step is included and thus the odor of the pre-modified resin and the modified hydrocarbon resin obtained by further acid-modifying a resin formed by hydrogenating the pre-modified hydrocarbon resin may be low.

Incidentally, the additional step may be conducted after the hydrogenation step or after the acid-modification step in the later described method for producing the modified hydrocarbon resin.

There are no particular limitations on the adsorbent used in the contact treatment step; it may be a chemical adsorbent, and may be a physical adsorbent.

Examples of the chemical adsorbent may include a zinc-based adsorbent such as basic zinc carbonate, zinc oxide, zinc sulfate, zinc laurate, zinc stearate, and zinc myristate; a zirconium-based adsorbent such as zirconium oxide, zirconium hydroxide, and zirconium phosphate; a manganese-based adsorbent such as manganese dioxide; a cobalt-based adsorbent such as cobalt chloride; a copper-based adsorbent such as copper chloride and copper oxide; and an amine-based adsorbent such as a polyamine compound.

Examples of the physical adsorbent may include a zeolitebased adsorbent so called water-containing aluminosilicate minerals such as sodium aluminum silicate, silicon dioxide, magnesium oxide, silica gel, silica·alumina, aluminum silicate, activated alumina, acid clay, activated clay, a dawsnites compound, and a hydrotalcites compound.

The adsorbent may be used singly in one kind, or two or more kinds thereof may be used in combination. Also, when two or more kinds of the adsorbent are used in combination, two or more kinds of the chemical adsorbent may be used in combination, two or more kinds of the physical adsorbent may be used in combination, and one kind or more of the chemical absorbent and one kind or more of the physical adsorbent may be used in combination; for example, the physical adsorbent may carry the chemical adsorbent.

From the view point of obtaining the pre-modified resin and the modified hydrocarbon resin especially excellent in low odor, among these adsorbents, it is preferable to use the chemical adsorbent, more preferable to use the zinc-based adsorbent, and particularly preferable to use the basic zinc carbonate.

There are no particular limitations on the method to make the adsorbent contact with the catalyst residue removed mixture in the contact treatment step. Examples of the method may include a batch processing method in which the catalyst residue removed mixture and the adsorbent are placed in an appropriately selected container together and stirred as required so as to contact each other, and a continuous processing method in which the adsorbent is filled in a packed tower in advance, and the catalyst residue removed mixture is distributed thereinto to bring them contact each other.

There are no particular limitations on the amount of use of the adsorbent when the catalyst residue removed mixture and the adsorbent are made contact by the batch processing method; however, to 100 parts by mass of the pre-modified resin included in the catalyst residue removed mixture, it is usually within a range of 0.01 parts by mass to 5.0 parts by mass, preferably within a range of 0.03 parts by mass to 3.0 parts by mass, and more preferably within a range of 0.05 parts by mass to 2.0 parts by mass.

There are no particular limitations on the temperature for making the catalyst residue removed mixture contact with the adsorbent; however, it is usually selected within a range of 10°C to 70°C. Also, there are no particular limitations on the treatment time; however, it is usually selected within a range of 0.1 hour to 2 hours.

If the catalyst residue removed mixture and the adsorbent are made contact by the batch processing method, the adsorbent may be removed from the catalyst residue removed mixture by a method such as filtration as required. Also, in the case there would be no problem in using the pre-modified resin and the modified hydrocarbon resin even if the adsorbent remained, it may be used in the next step without removing the adsorbent from the catalyst residue removed mixture.

### 2. Modified hydrocarbon resin

The modified hydrocarbon resin of the present invention is a modified hydrocarbon resin obtained by further acid-modifying a resin formed by hydrogenating the pre-modified resin.

The degree of hydrogenation of olefin (hereinafter it may be simply referred to as the degree of hydrogenation in some cases) in the modified hydrocarbon resin is within a range of 0.1% to 50%.

Here, the degree of hydrogenation of olefin refers to a hydrogenated proportion of the overall nonaromatic carbon-carbon double bonds in the pre-modified resin.

The degree of hydrogenation in the present invention is within a range of 0.1% to 50%, but is preferably within a range of 1 % to 50%, and above all, preferably within a range of 5% to 50%, and in particular, preferably within a range of 10% to 50%. The degree of hydrogenation is in the above described range and thus odor may be low and change in hue due to factors such as heat deterioration may be small. Also, if the degree of hydrogenation is too high, it is difficult to acid-modify the resin formed by hydrogenating the pre-modified resin by the reaction thereof with an unsaturated carboxylic acid or an unsaturated dicarboxylic acid anhydride, and there is a risk that large amount of unreacted unsaturated carboxylic acid and unsaturated dicarboxylic acid anhydride remain in the modified hydrocarbon resin.

Incidentally, as the carbon-carbon double bond in the pre-modified resin, other than a non-aromatic carbon-carbon double bond (mainly a carbon-carbon double bond which is a main chain), an aromatic carbon-carbon double bond (carbon-carbon double bond in an aromatic ring) is also present, but the aromatic carbon-carbon double bond is preferably not hydrogenated if at all possible; the proportion hydrogenated among all the aromatic carbon-carbon double bonds is usually 10% or less, preferably 7% or less, and more preferably 0%.

Also, the degree of hydrogenation of olefin can be measured from the difference between the amount of olefin included in the pre-modified resin and that of the modified hydrocarbon resin. Here, the amount of olefin included in each of the resin may be measured by a ¹H-NMR spectrum measurement. The ¹H-NMR spectrum measurement may be performed using deuterochloroform as a solvent and JMN-AL series AL400 from JEOL Ltd. as a NMR measurement device.

The modified hydrocarbon resin includes a carboxyl group or an acid anhydride group derived from an unsaturated carboxylic acid or an unsaturated dicarboxylic acid anhydride.

Examples of the unsaturated carboxylic acid may include a C8 or less ethyleny unsaturated carboxylic acid such as an acrylic acid, a methacrylic acid, a crotonic acid, a maleic acid, a fumaric acid, an itaconic acid, and a citraconic acid; and a Diels-Alder addition product of a conjugated diene like 3,6-endomethlene-1,2,3,6-tetrahydrophtalic acid and a C8 or less α,β-unsaturated dicarboxylic acids.

Examples of the unsaturated dicarboxylic acid anhydride may include a C8 or less α,β-unsaturated dicarboxylic acid anhydride such as a maleic anhydride, an itaconic acid anhydride, and a citraconic anhydride; and a Diels-Alder addition product of a conjugated diene like 3,6-endomethlene-1,2,3,6-tetrahydrophtalic acid anhydride and a C8 or less α,β-unsaturated dicarboxylic acid anhydrides.

In views of the easiness of reaction and economical efficiency, the C8 or less α,β-unsaturated dicarboxylic acid anhydride is preferable, and the maleic anhydride is preferable in particular.

The modified hydrocarbon resin may include one kind or two kinds or more of the carboxyl group and the acid anhydride group derived from these unsaturated carboxylic acid and unsaturated dicarboxylic acid anhydride.

The acid value of the modified hydrocarbon resin is preferably 0.5 to 20 KOHmg/g, and above all, preferably 1 to 17 KOHmg/g, and more preferably 1.5 to 15 KOHmg/g. The acid value is in the above range and thus odor may be low and change in hue due to factors such as heat deterioration may be small. Also, if the acid value is too low or the acid value is too high, in the case of using the modified hydrocarbon resin for materials such as a tackifier and an adhesive, the adhesiveness thereof may be degraded in some cases.

The acid value in the present invention may be, for example, a value measured for the modified hydrocarbon resin according to JIS K 0070.

The modified hydrocarbon resin is the resin formed by hydrogenating the pre-modified resin is further modified by an unsaturated carboxylic acid or an unsaturated dicarboxylic acid anhydride, and the modified hydrocarbon resin may include unreacted unsaturated carboxylic acid and unsaturated dicarboxylic acid. The content of the unreacted unsaturated carboxylic acid and unsaturated carboxylic acid anhydride in the modified hydrocarbon resin is, preferably 3000 ppm or less, more preferably 2000 ppm or less, and further preferably 1000 ppm or less. The content in the above described range allows the reduction of odor.

Here, the content of the unreacted unsaturated carboxylic acid and unsaturated dicarboxylic acid anhydride refers to the amount of unsaturated carboxylic acid and unsaturated dicarboxylic acid anhydride included in the modified hydrocarbon resin in the free state not reacted with the resin formed by hydrogenating the pre-modified resin, among the unsaturated carboxylic acid and the unsaturated dicarboxylic acid anhydride used as an acid modification agent for producing the modified hydrocarbon resin.

The content of the unreacted unsaturated carboxylic acid and unsaturated dicarboxylic acid anhydride may be measured by dissolving the modified hydrocarbon resin in a solvent such as toluene, then mixing the product with water, and determining the quantity of unsaturated carboxylic acid and unsaturated dicarboxylic acid extracted in water by a liquid chromatography.

The weight average molecular weight (Mw) of the modified hydrocarbon resin is preferably within a range of 1,000 to 4,000, and above all, preferably within a range of 1,500 to 3,800, and in particular, more preferably within a range of 1,800 to 3,600. The weight average molecular weight (Mw) is in the above described range, and thus excellent heat stability may be obtained. Also, in the case of using the modified hydrocarbon resin for materials such as a tackifier and an adhesive, it may have excellent compatibility with a base polymer, and thus the tackifier and the adhesive with long open time and excellent coating easiness and adhesiveness may be obtained.

The Z-average molecular weight (Mz) of the modified hydrocarbon resin is preferably within a rage of 1, 500 to 10,000, and above all, preferably within a range of 2, 500 to 9,000, and in particular, preferably within a range of 3,900 to 8,000. The Z-average molecular weight (Mz) is in the above described range and thus excellent heat stability may be obtained. Also, in the case of using the modified hydrocarbon resin for materials such as a tackifier and an adhesive, it may have excellent compatibility with a base polymer, and thus the tackifier and the adhesive with long open time and excellent coating easiness and adhesiveness may be obtained.

Incidentally, in the present invention, the weight average molecular weight (Mw) and the Z-average molecular weight (Mz) of the modified hydrocarbon resin are measured by a measurement of high speed liquid chromatography as a value in terms of polystyrene. The weight average molecular weight and the Z-average molecular weight can be measured by, more specifically, using "HLC-8320GPC" from Tosoh Corporation as a measurement device, with three connected columns of "TSKgel^{™} SuperMultiporeHZ" from Tosoh Corporation as a column, and tetrahydrofuran as a solvent, at 40°C and the flow amount of 1.0 mL/min.

The ratio (Mz/Mw) of the Z-average molecular weight to the weight-average molecular weight of the modified hydrocarbon resin is preferably within a range of 1.5 to 2.5, and above all, preferably within a range of 1.6 to 2.4, and in particular, more preferably within a range of 1.65 to 2.35. The ratio is in the above described range and thus excellent heat stability may be obtained. Also, in the case of using the modified hydrocarbon resin for materials such as a tackifier and an adhesive, it may have excellent compatibility with a base polymer, and thus the tackifier and the adhesive with long open time and excellent coating easiness and adhesiveness may be obtained.

The Gardner color scale of a toluene solution of 50 mass% in the modified hydrocarbon resin is preferably 5 or lower, and above all, preferably 4 or lower. The hydrocarbon resin with too large value of this would be inferior in its hue.

The measurement method of the Gardner color scale in the present invention may be a method in which a toluene solution of 50 mass% for a modified hydrocarbon resin is prepared, and the Gardner color scale of the solution is measured according to JIS K 0071-2.

The softening point of the modified hydrocarbon resin is preferably 30°C or more, and above all, preferably within a range of 50°C to 125°C, and more preferably within a range of 60°C to 115°C. The softening point is in the above described range and thus excellent heat stability may be obtained. Also, in the case of using the modified hydrocarbon resin for materials such as a tackifier and an adhesive, it may have excellent compatibility with a base polymer, and thus the tackifier and the adhesive with long open time and excellent coating easiness and adhesiveness may be obtained.

The softening point in the present invention may be, for example, a value measured for the modified hydrocarbon resin according to JIS K 6863.

The method that may be used for producing the modified hydrocarbon resin is a method comprising a hydrogenation step of hydrogenating the pre-modified resin, and a modification step of acid-modifying the resin obtained in the hydrogenation step by making it react with an unsaturated carboxylic acid or an unsaturated dicarboxylic acid anhydride.

The hydrogenation of the pre-modified resin may be performed by making the pre-modified resin contact with hydrogen under presence of a hydrogenation catalyst in the hydrogenation step.

The hydrogenation catalyst to be used may be those described in publications such as JP-A No. S58-43412, JP-A No. S60-26024, JP-A No. S64-24826, JP-A No. H1-138257, and JP-A No. H7-41550, and it may be a homogeneous catalyst and may be a heterogeneous catalyst.

Examples of the homogeneous catalyst may include a catalyst system comprising a combination of a transitional metal compound and an alkali metal compound such as the combination of cobalt acetate w/ triethylaluminum, nickel acetylacetonate w/ triisobutylaluminum, titanocenedichloride w/ n-butyl lithium, zirconocenedichoride w/ sec-butyl lithium, and tetrabutoxy titanate w/ dimethyl magnesium; and a noble metal complex catalyst such as dichlorobis(triphenylphosphine)palladium, carbonyl(chlorohydrido)-tris(triphenylphosphine)-ruthenium, and chlorotris(triphenylphosphine)rhodium.

Examples of the heterogeneous catalyst may include one having a hydrogen added catalyst metal such as Ni and Pd carried by a carrier. Examples of the carrier may include silica, alumina, silica alumina, and diatom earth. Above all, a Ni catalyst carried by silica is preferable.

The hydrogenation reaction may be performed directly to the pre-modified resin, or may be performed in an organic solvent by dissolving the pre-modified resin in the organic solvent. From the viewpoint of easiness of handling, it is preferable to perform the reaction directly to the pre-modified resin. There are no special limitations on the organic solvent used to dissolve the pre-modified resin as long as it is inactive with the catalyst; however, a hydrocarbon-based solvent is usually used for its excellent solubility of a hydrogen-added product to be generated.

Examples of the hydrocarbon-based solvent may include aromatic hydrocarbons such as benzene and toluene; aliphatic hydrocarbons such as n-pentane and hexane; and alicyclic hydrocarbons such as cyclohexane and decaline; among these, ring-shaped aromatic hydrocarbons and alicyclic hydrocarbons are preferable. These organic solvents may be used in one kind alone, or two kinds or more thereof may be used in combination. Incidentally, the solvent used in the polymerization of the pre-modified resin may be used as the organic solvent.

There are no particular limitations on the method for making the pre-modified resin contact with hydrogen under presence of the hydrogenation catalyst. Examples thereof may include a batch processing method in which the pre-modified resin and the hydrogenation catalyst are placed in an appropriately selected container together and stirred as required so as to contact each other, and a continuous processing method in which the hydrogenation catalyst is filled in a packed tower in advance, and the pre-modified resin is distributed thereinto to bring them contact each other.

The hydrogenation reaction may be performed according to a usual method. The degree of hydrogenation of the pre-modified resin can be adjusted by appropriately controlling the conditions of the reaction such as the kind of the hydrogenation catalyst and a reaction temperature.

If the homogeneous catalyst were used as the hydrogenation catalyst, the degree of hydrogenation of the pre-modified resin would be heightened, and a ruthenium homogeneous catalyst is preferable as the said homogeneous catalyst. The reaction temperature is preferably within a range of 100°C to 200°C, and more preferably within a range of 130°C to 195°C.

If the heterogeneous catalyst were used as the hydrogenation catalyst, the degree of hydrogenation of the pre-modified resin would be restrained, and a nickel heterogeneous catalyst is preferable as the said heterogeneous catalyst. The reaction temperature is preferably within a range of 150°C to 300°C, and more preferably within a range of 180°C to 260°C.

The hydrogen pressure is, in absolute pressure, usually within a range of 0.01 MPa to 10 MPa, preferably within a range of 0.05 MPa to 6 MPa, and further preferably within a range of 0.1 MPa to 5 MPa.

Also, the hydrogen amount is usually the hydrogen amount theoretically necessary or more, but it may be within a range of 1 to 20 times of the hydrogen amount theoretically necessary in order to obtain the resin with the intended degree of hydrogenation.

After the termination of the hydrogenation reaction, the hydrogenation catalyst is removed from the reaction solution by a method such as centrifugation and filtration as required. There are no particular limitations on the method for centrifugation and filtration if conditions therefor allow the used catalyst to be removed. Removing by filtration is preferable since it is easy and efficient. In the case of filtration, pressure filtration and vacuum filtration may be used. Also, from the point of efficiency, it is preferable to use a filter aid such as diatom earth and pearlite. Also, as required, a catalyst deactivator such as water and alcohol may be used, and an adsorbent such as activated clay and alumina may be added.

In the modification step, the resin obtained by hydrogenating the pre-modified resin is treated with an unsaturated carboxylic acid or an unsaturated dicarboxylic acid anhydride so as to introduce the carboxyl group or the acid anhydride group into the resin, and thereby the modified hydrocarbon resin is produced. It means that, the resin obtained by the hydrogenation step is acid-modified by the reaction (acid-modification reaction) with the unsaturated carboxylic acid or the unsaturated dicarboxylic acid anhydride, so as to obtain the desired modified hydrocarbon resin.

The amount of the unsaturated carboxylic acid and the unsaturated dicarboxylic acid anhydride used as the acid modification agent in the acid-modification reaction to 100 parts by mass of the pre-modified resin is, in consideration of the hue of the resin to be obtained, usually 0.01 to 10 parts by mass, and preferably 0.05 to 5 parts by mass. The unsaturated carboxylic acid and the unsaturated dicarboxylic acid anhydride to be used as the acid-modification agent may be used solely and two kinds or more thereof may be used in combination.

The reaction temperature of the acid-modification reaction may be usually within a range of 50 to 300°C. If the reaction temperature is too low, the reaction efficiency may be inferior, and there is a risk that the content of the unreacted unsaturated carboxylic acid and unsaturated dicarboxylic acid anhydride in the modified hydrocarbon resin may increase. Also, the reaction time may be usually within a range of 5 minutes to 20 hours. If the reaction time is too short, the reaction efficiency may be inferior, and there is a risk that the content of the unreacted unsaturated carboxylic acid and unsaturated dicarboxylic acid anhydride in the modified hydrocarbon resin may increase.

Also, as required, materials such as a diluent, an antigelling agent, and a reaction accelerator may be present.

Incidentally, configurations regarding the modified hydrocarbon resin such as the degree of hydrogenation of olefins, the weight average molecular weight (Mw), the Z-average molecular weight (Mz), the ratio (Mz/Mw) of the Z-average molecular weight to the weight average molecular weight, the Gardner color scale, the softening point, the acid value, and the content of unreacted unsaturated carboxylic acid and unsaturated dicarboxylic acid anhydride can be easily adjusted to the desired range by preparing the modified hydrocarbon resin in accordance with the abovementioned blending and production method.

### 3. Other components

In the modified hydrocarbon resin of the present invention, for example, an antioxidant, a perfume, and an absorbent may be blended and used. Blending the antioxidant, the perfume, and the absorbent in the modified hydrocarbon resin may further reduce the odor.

Also, in the modified hydrocarbon resin of the present invention, as required, for example, various blending agents such as an oxidation inhibitor, an ultraviolet absorbing agent, and a wax may be blended.

Hereinafter, the antioxidant, the perfume, and the absorbent are explained.

### (1) Antioxidant

The antioxidant may be the one capable of reducing the odor derived from the modified hydrocarbon resin by blending, and a known antioxidant may be used. Above all, the antioxidant is preferably a compound including a 2,2,6,6-tetraalkyl-4-piperidyl group. Blending the above described compound as the antioxidant may suppress the odor to be low.

Here, the "2,2,6,6-tetraalkyl-4-piperidyl group" refers to a group represented by the following general formula (1).

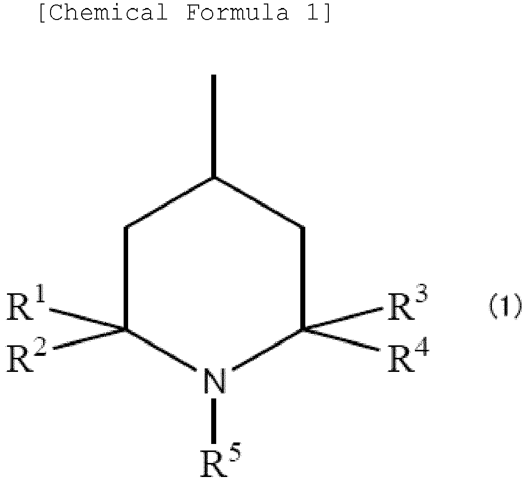

In the formula (1), R¹ to R⁴ are arbitrary alkyl groups, and preferably C1-4 alkyl groups. R⁵ is hydrogen or a C1-8 alkyl group or alkoxy group that may have a substituent. R¹ to R⁴ may be the same and may be different from each other. Specific examples thereof may include a methyl group, an ethyl group, a propyl group, a butyl group, a hexyl group, and an octyl group; however, the methyl group, the ethyl group, the propyl group, and the butyl group are preferable. Specific examples of R⁵ may include hydrogen and a methyl group, and an octyl group, but hydrogen is preferable. As the compound including the 2,2,6,6-tetraalkyl-4-piperidyl group represented by the formula, those having the molecular weight of approximately 400 to 4,000 has been known, and a part of them has been commercially available.

Specific examples of the piperidyl group-containing compound may include the following compounds (product names are in parentheses []; all of them are from Ciba Specialty Chemicals):
(i) bis(2,2,6,6-tetramethyl-4-piperidyl)sebacate [TINUVIN770]
(ii) poly[{6-(1,1,3,3-tetramethylbutyl)amino-1,3,5-triazin-2,4-diyl}{ (2,2,6,6-tetramethyl-4-piperidyl)imino}hexamethylene{(2,2,6,6-tetramethyl-4-piperidyl)imino}] [CHIMASSORB 944]
(iii) bis(1,2,2,6,6-pentamethyl-4-piperidyl)sebacate [TINUVIN 765]
(iv) 2-(3,5-di-t-butyl-4-hydroxybenzyl)-2-n-butylmalonatebis(1,2,2,6,6-pentamethyl-4-piperidyl) [TINUVIN 144]
(v) Dimethylsuccinate-1-(2-hydroxyethyl)-4-hydroxy-2,2,6,6-tetramethyl-4-piperidine polycondensate [TINUVIN 622]
(vi) N,N'-bis(3-aminopropyl)ethylenediamine-2,4-bis[N-butyl-N-(1,2,2,6,6-pentamethyl-4-piperidyl)amino]-6-chloro-1,3,5-triadine condensate [CHIMASSORB 119]
(vii) bis(1-octyloxy-2,2,6,6-tetramethyl-4- piperidyl)sebacate [TINUVIN 123].

In the above, (i) and (ii) are preferable since the effect of hue stabilization when heated is remarkable.

The blending quantity of the antioxidant may be within the range that allows the effect of the present invention to be obtained; for example, to 100 parts by mass of the modified hydrocarbon resin, it may be within a range of 0.05 parts by mass to 5 parts by mass, and above all, preferably within a range of 0.08 parts by mass to 1 part by mass, and in particular, preferably within a range of 0.1 parts by mass to 0.5 parts by mass. Also, when the antioxidant is the compound including 2,2,6,6-tetraalkyl-4-piperidyl group, the blending quantity of the piperidyl group-containing compound to 100 g of the modified hydrocarbon resin may be, the number of piperidyl group being 1.5 * 10⁻⁴ to 2.0 * 10⁻³, and preferably the number of piperidyl group being 3.0 * 10⁻⁴ to 2.0 * 10⁻². The blending quantity is within the above described range and thus the odor may be suppressed to be low.

As a method for blending the antioxidant in the modified hydrocarbon resin, for example, a method of mixing the antioxidant in the modified hydrocarbon resin in the state thermally melted may be used.

### (2) Perfume

The perfume may be the one capable of reducing the odor derived from the modified hydrocarbon resin by blending, and various perfumes may be used. Above all, perfume is preferably a single perfume of which boiling point under normal pressure is 200°C or more or a compound perfume comprising two or more kinds of the single perfume. Blending the above described perfume as the perfume allows masking of the odor derived from the modified hydrocarbon resin.

The boiling point of the single perfume may be 200°C or more under normal pressure, and preferably 220°C or more. The above described boiling point allows the single perfume to have less evaporation emission and decomposition degradation at a normal temperature or a processing temperature. Thus, when blended in the modified hydrocarbon resin, the odor may be suppressed continuously even in long term preservation.

Appropriate single perfume for masking the odor of the modified carbon resin is the one having either one of green-like, vanilla-like, balsam-like, woody-like, musk-like, amber-like, fruit-like, and floral-like single note. Among them, the one having green-like, vanilla-like, balsam-like, woody-like, musk-like, amber-like, and fruit-like single note is particularly preferable. The compound perfume comprising two or more kinds of the single perfume may be the one having a mixed note including two or more kinds of these single notes.

Specific examples of the single perfume preferably usable may include, as the green-like note, cis-3-hexenylsalicylate, Triplal, Helional, and "alcohol having C9-11 main chain including one unsaturated bond" such as 4-methyl-3-decenol, 9-decenol, 1-undecenol, and cis-6-nonenal; as the vanilla-like note, vanillin, ethyl vanillin, and heliotropin; as the balsam-like note, benzyl cinnamate, and isoeugenol; as the woody-like note, α-ionone, β-ionone, methyl ionone, acetyl cedrene, and santalol; as the musk-like note, galaxolide, and ethylene brassylate; as the amber-like note, Iso E Super, and ambroxan; as the fruit-like note, methyl-p-tolylethylglycidate, methyl anthranilate, ortho-tert-butylcyclohexyl acetate, and a "C9-11 lactone compound having 5 to 6 membered ring structure" such as γ-nonalactone, γ-decalactone, δ-decalactone, and γ-undecalactone; as the floral-like note, geraniol, citronellol, phenyl ethyl alcohol, methyldihydrojasmonate, and benzyl benzoate; and as the other note difficult to be categorized in the above and those including a compound note, eugenol, indole, phenylethylphenyl acetate, benzyl acetate, citronellyl nitryl, lily aldehyde, lyral, α-damascone, and β-damascone.

Among them, it is preferable that the single perfume is the "alcohol having C9-11 main chain including one unsaturated bond" such as 4-methyl-3-decenol, 9-decenol, 1-undecenol, and cis-6-nonenal, and the "C9-11 lactone compound having 5 to 6 membered ring structure" such as γ-nonalactone, γ-decalactone, δ-decalactone, and γ-undecalactone.

The blending quantity of the perfume may be within a range that allows the effect of the present invention to be obtained; for example, as a mass ratio to the modified hydrocarbon resin, it may be within a range of 5 ppm to 1000 ppm, and above all, preferably within a range of 10 ppm to 500 ppm, and particularly preferably within a range of 20 ppm to 200 ppm. The blending quantity is in the above described range and thus the odor may be efficiently reduced.

As the method for blending the perfume in the modified hydrocarbon resin, for example, a method of melting the modified hydrocarbon resin, adding a specific amount of the perfume thereto, and sufficiently stirring and mixing thereof.

### (3) Absorbent

The adsorbent may be the one capable of reducing the odor derived from the modified hydrocarbon resin by blending. Such an adsorbent may be the same as those described in the section "1. Hydrocarbon resin" above.

The blending quantity of the absorbent may be within a range that allows the effect of the present invention to be obtained; for example, to 100 parts by mass of the modified hydrocarbon resin, it may be within a range of 0.05 parts by mass to 5 parts by mass, and above all, preferably within a range of 0.08 parts by mass to 1 part by mass, and in particular, preferably within a range of 0.1 parts by mass to 0.5 parts by mass. The blending quantity is in the above described range and thus the odor may be suppressed to be low.

As the method for blending the absorbent in the modified hydrocarbon resin, a method of adding the absorbent to the modified hydrocarbon resin and mixing may be used. Also, when the production method of the pre-modified resin used in the production of the modified hydrocarbon resin comprises the contact treatment step, an absorbent-blended modified hydrocarbon resin may be obtained if the absorbent made contact during the production of the pre-modified resin is not removed.

### 4. Applications

The modified hydrocarbon resin of the present invention has low odor, excellent color tone and excellent heat resistant hue stability; thus, it can be applied to various usages to which conventional modified hydrocarbon resins are applicable. For example, it may be applied to materials such as tackifiers, binder resins, compatibilizers, tackifier modifiers, road surface marking material modifiers, road pavement material modifiers, rubber molded product modifiers, ink modifiers, paints modifiers, and resin modifiers. Among them, applications as tackifiers and road surface marking material modifiers are suitable.

The present invention is not limited to the embodiments. The embodiments are exemplifications, and any other variations are intended to be included in the technical scope of the present invention if they have substantially the same constitution as the technical idea described in the claim of the present invention and offer similar operation and effect thereto.

### Examples

Hereinafter, the present invention is more specifically described by way of Examples and Comparative Examples. Incidentally, unless particularly stated otherwise, parts and percentage (%) in the various Examples are on a mass basis.

Various measurements were carried out according to the following methods.

### [Weight average molecular weight, Z-average molecular weight and molecular weight distribution]

The modified hydrocarbon resin as a sample was analyzed by gel permeation chromatography to determine the weight average molecular weight (Mw) and the Z-average molecular weight (Mz) calculated relative to polystyrene standards, and the molecular weight distribution was shown as the ratio of Mz/Mw. Incidentally, the measurement by the gel permeation chromatography analysis was conducted using "HLC-8320GPC^{™}" from Tosoh Corp. as a measurement device, with three connected columns of "TSKgel SuperMultiporeHZ" from Tosoh Corp. as the column, and tetrahydrofuran as a solvent at 40°C and a flow amount of 1.0 mL/min.

### [Gardner color scale of toluene solution of 50 mass%]

A toluene solution of 50 mass% for the modified hydrocarbon resin as a sample was prepared and the Gardner color scale of the said solution was measured according to JIS K 0071-2. The smaller value indicates more excellent color tone.

### [Heat resistant hue stability]

The modified hydrocarbon resin as a sample was placed still in an oven at 200°C for 3 hours, and then after cooling thereof, the Gardner color scale was measured in accordance with JIS K 0071-2. The smaller value indicates more excellent heat resistant hue stability.

### [Softening point (°C)]

Measurement for the modified hydrocarbon resin as a sample was conducted according to JIS K 6863.

### [Degree of hydrogenation of olefin (%)]

The amount of olefin in the pre-modified resin and the modified hydrocarbon resin as a sample was respectively measured by a ¹H-NMR spectrum measurement, and the degree of hydrogenation of olefin (%) was calculated based on the difference between pre-hydrogenation and post hydrogenation olefin amount. Incidentally, in the ¹H-NMR spectrum measurement, deuterochloroform was used as a solvent, and JMN-AL series AL400 from JEOL Ltd. was used as a NMR measurement device.

### [Acid value]

Measurement for the modified hydrocarbon resin as a sample was conducted according to JIS K 0070.

### [Content of unreacted maleic anhydride]

After dissolving the modified hydrocarbon resin as a sample in toluene, with water, extracted as a maleic acid and the water phase was measured with an ion chromatography.

### [Odor evaluation test]

The sensory evaluation of the modified hydrocarbon resin as a sample was conducted according to the odor intensity measurement method in Odor Measurement Method by Olfaction issued by Japan Association of Odor Environment. In specific, first, the modified hydrocarbon resin of 10 g and the size of a piece being approximately 10 mm * 5 mm * 5 mm was put in a heat resistant container of 120 mL and the container was covered by an aluminum foil. Then, the heat resistant container with the modified hydrocarbon resin therein was put in an oven and heated in the conditions of a temperature of 160°C and for 30 minutes, and the odor after the heating was confirmed. The odor was confirmed by the panel of 6 people not used to the odor of petroleum resin (which means they do not have contact with the odor of petroleum resin in usual lifestyle). In this test, to prevent olfactory fatigue, the method adopted was to divide the panel of 6 people into 2 groups of 3 people in each group, and the odor was smelt by one group by the other. Also, the order of the samples for smelling the odor was at random.
0: No odor
1: Barely recognizable odor (Detection threshold concentration)
2: Weak odor but can be known what odor is (Recognition threshold concentration)
3: Easily sensible odor
4: Strong odor
5: Intensive odor

Incidentally, the result of the sensory test was determined by excluding the maximum value and the minimum value among the judged values respectively from the panel of 6 people, and by averaging the judged values of the rest of 4 people. The smaller value of the sensory test is more preferable.

### [Example 1]

The mixture of cyclopentane of 35.3 parts and cyclopentene of 25.0 parts was introduced to a polymerization reactor, the temperature was raised to 60°C, and thereafter aluminum chloride of 0.9 parts was added thereto (mixture M1). Sequentially, the mixture a1 comprising 1,3-pentadiene of 35.3 parts, isobutylene of 6.9 parts, styrene of 29.2 parts, C4-C6 unsaturated hydrocarbon of 0.5 parts, and C4-C6 saturated hydrocarbon of 8.4 parts; and t-butyl chloride of 0.6 parts were, respectively through separate lines, maintained at a temperature of 60°C for 60 minutes, and continuously added to the polymerization reactor including the mixture M1 to perform polymerization. After that, a sodium hydroxide solution was added to the polymerization reactor to terminate the polymerization reaction. Incidentally, the kind and the amount of the components in the polymerization reactor at the time of polymerization reaction are shown in Table 1 altogether. Sediments generated by the polymerization termination were removed by filtration to obtain a polymer solution including components such as a pre-modified resin and unreacted monomers.

Also, the polymer solution was partially taken out and introduced to a distillation still, heated under a nitrogen atmosphere to remove the polymerization solvent and the unreacted monomers, and thereby a pre-modified resin was obtained.

Also, a polymer solution as a raw material was supplied to a tuber heat exchanging hydrogenation reaction device, and the pre-modified resin was hydrogenated. The hydrogenation reaction was conducted using a nickel silica catalyst (from JGC Catalyst and Chemicals Ltd.; N108F) as a hydrogenation catalyst, and in the conditions of the hydrogen pressure of 1.2 MPa, the reaction temperature of 200°C, the time for retention in the reaction tube of 30 minutes, and 1.7 times of the hydrogen amount theoretically necessary in order to obtain the resin with the intended degree of hydrogenation.

The polymer solution including the resin formed by hydrogenating the pre-modified resin was introduced to a distillation still, heated under a nitrogen atmosphere to remove the polymerization solvent and unreacted monomers. Next, oligomer components with low molecular weight were distilled while blowing saturated water vapor at 200°C or more.

Next, to 100 parts of the resin in melted state, 3.1 parts of maleic anhydride was added to perform addition reaction at 230°C for 1 hour, and then 0.2 parts of pentaerythritoltetrakis[3-(3,5-di-t-butyl-4-hydroxyphenyl)propionate](from BASF, product name: IRGANOX1010) was added thereto and mixed. After that, a melted resin was taken out from the distillation still, cooled to a room temperature, and thereby a modified-hydrocarbon resin for Example 1 was obtained.

Regarding the obtained modified hydrocarbon resin for Example 1, the weight average molecular weight, the Z-average molecular weight, the molecular weight distribution, the Gardner color scale, the softening point, the acid value, and the amount of unreacted maleic anhydride were measured, the degree of hydrogenation of olefin was determined, and the odor evaluation test was conducted therefor. The measurement results of these are shown in Table 1 below altogether.

### [Examples 2 to 4, Comparative Examples 1 to 5]

The modified hydrocarbon resins for Examples 2 to 4 and Comparative Examples 1 to 5 were respectively obtained in the same manner as in Example 1 except that the kind and the amount of components added to the polymerization reactor, the polymerization temperature and the conditions for hydrogenation were respectively changed as shown in Table 1 below. Incidentally, diisobutylene, dicyclopentadiene, vinyltoluene, indene, α-methylstyrene, β-methylstyrene, C9 saturated hydrocarbon, toluene, xylene, boron trifluoride, and benzyl chloride not described in Example 1 were used for the polymerization by mixing with t-butyl chloride together with a component such as 1,3-pentadiene.

The same measurements as in Example 1 were conducted for the obtained modified hydrocarbon resins for Examples 2 to 4 and Comparative Examples 1 to 5. The measurement results of these are shown in Table 1 below altogether.

**[Table 1]**

| | | Example 1 | Example 2 | Example 3 | Example 4 | Comp. Example 1 | Comp. Example 2 | Comp. Example 3 | Comp. Example 4 | Comp. Example 5 |
|---|---|---|---|---|---|---|---|---|---|---|
| Pre-modified resin composition (part) | | | | | | | | | | |
| 1,3-pentadiene | | 35.0 | 48.8 | 48.6 | 39.8 | 48.8 | 13.6 | 17.8 | 0.0 | 39.1 |
| C4-C6 alicyclic monoolefin | cyclopentene | 24.9 | 26.9 | 39.0 | 30.1 | 26.9 | 0.0 | 0.0 | 0.0 | 29.8 |
| C4-C8 acyclic monoolefin | isobutylene | 4.9 | 14.7 | 8.2 | 26.2 | 14.7 | 0.0 | 0.0 | 0.0 | 21.2 |
| | diisobutylene | 0.0 | 7.3 | 1.4 | 0.0 | 7.3 | 0.0 | 0.0 | 0.0 | 0.0 |
| Other monomer | C4-C6 unsaturated hydrocarbon | 0.5 | 0.6 | 0.4 | 0.5 | 0.6 | 8.0 | 9.0 | 1.4 | 0.5 |
| Alicyclic diolefin | dicyclopentadiene | 0.0 | 0.1 | 0.2 | 0.0 | 0.1 | 70.2 | 63.9 | 33.2 | 0.0 |
| | cyclopentadiene | 0.0 | 0.0 | 0.0 | 0.0 | 0.0 | 7.5 | 7.3 | 0.0 | 0.0 |
| Aromatic monoolefin | styrene | 31.6 | 0.0 | 0.0 | 2.7 | 0.0 | 0.0 | 0.0 | 5.4 | 8.7 |
| | vinyltoluene | 0.0 | 0.0 | 0.0 | 0.0 | 0.0 | 0.0 | 0.0 | 23.8 | 0.0 |
| | indene | 0.0 | 0.0 | 0.0 | 0.0 | 0.0 | 0.0 | 0.0 | 21.6 | 0.0 |
| | *α*-methylstylene | 0.0 | 0.0 | 0.0 | 0.0 | 0.0 | 0.0 | 0.0 | 7.6 | 0.0 |
| | *β*-methylstylene | 0.0 | 0.0 | 0.0 | 0.0 | 0.0 | 0.0 | 0.0 | 5.4 | 0.0 |
| Acid-modifying agent | maleic anhydride | 3.1 | 1.6 | 2.2 | 0.7 | 1.6 | 0.7 | 2.0 | 1.6 | 0.7 |
| Number of parts in pre-modified resin overall | | 1000 | 1000 | 1000 | 1000 | 1000 | 1000 | 1000 | 100.0 | 1000 |
| Solvent composition (part) | C4-C6 saturated hydrocarbon | 8.4 | 7.4 | 14.1 | 10.5 | 7.4 | 0.0 | 0.0 | 0.0 | 10.5 |
| | C9 saturated hydrocarbon | 0.0 | 0.0 | 0.0 | 0.0 | 0.0 | 0.0 | 0.0 | 36.8 | 0.0 |
| | cyclopentane | 35.3 | 30.9 | 59.2 | 44.1 | 30.9 | 0.0 | 0.0 | 0.0 | 44.1 |
| | toluene | 0.0 | 0.0 | 2.4 | 1.3 | 0.0 | 0.0 | 0.0 | 0.0 | 1.3 |
| | xvlene | 0.0 | 0.0 | 0.0 | 0.0 | 0.0 | 13.0 | 17.0 | 0.0 | 0.0 |
| Polymerization catalyst composition (part) | boron trifluoride | 0.0 | 0.0 | 0.0 | 0.0 | 0.0 | 0.0 | 0.0 | 0.8 | 0.0 |
| | aluminum chloride | 0.9 | 1.5 | 0.6 | 1.0 | 1.5 | 0.0 | 0.0 | 0.0 | 1.0 |
| | t-butylchloride | 0.6 | 0.0 | 0.3 | 0.0 | 0.0 | 0.0 | 0.0 | 0.0 | 0.0 |
| | benzvlchloride | 0.0 | 0.3 | 0.0 | 0.0 | 0.3 | 0.0 | 0.0 | 0.0 | 0.0 |
| Polymerization condition | Polymerization temperature (°C) | 80 | 70 | 60 | 60 | 70 | 260 | 260 | 60 | 60 |
| Hydrogenation condition | Temperature (°C) | 200 | 180 | 240 | 170 | - | 250 | 200 | 220 | 250 |
| | Pressure (MPa) | 1.2 | 0.5 | 1.5 | 2.5 | - | 5.0 | 0.7 | 1.0 | 3.0 |
| | Hydrogen amount (times) | 1.7 | 1.0 | 0.4 | 1.4 | - | 1.7 | 1.2 | 1.0 | 2.0 |
| Modified hydrocarbon resin | Softening point (°C) | 96 | 99 | 113 | 87 | 99 | 130 | 125 | 130 | 91 |
| | Weight average molecular weight (Mw) | 3200 | 2800 | 3200 | 1800 | 2800 | 900 | 1000 | 2200 | 2200 |
| | Z-average molecular weight (Mz) | 5900 | 5800 | 6300 | 3200 | 5800 | 2500 | 2700 | 4300 | 4800 |
| | Molecular weight distribution (Mz/Mw) | 1.8 | 2.1 | 2.0 | 1.8 | 2.1 | 2.8 | 2.7 | 2.0 | 2.2 |
| | Acid value (KOHmg/g) | 8.0 | 4.0 | 6.0 | 2.0 | 4.0 | 0.0 | 6.0 | 4.0 | 1.0 |
| | Gardner color scale | 1.5 | 2.0 | 1.5 | 2.5 | 6.0 | 0.5 | 6.0 | 6.5 | 2.5 |
| | Degree of hydrogenation of olefin (%) | 40 | 10 | 20 | 15 | 0 | 98 | 15 | 20 | 90 |
| | Heat resistant hue stability | 4.5 | 5.0 | 4.5 | 5.5 | 9.0 | 4.5 | 100 | 9.0 | 5.5 |
| | Odor evaluation (5 scales) | 1 | 2 | 1 | 2 | 5 | 5 | 4 | 4 | 5 |
| | Unreacted maleic anhydride amount (ppm) | 500 | 300 | 400 | 200 | 200 | 4000 | 350 | 500 | 2000 |

Following can be understood from Table 1.

The modified hydrocarbon resin for Comparative Example 1 was not hydrogenated and thus the color tone thereof was inferior and the odor evaluation was low. The modified hydrocarbon resin for Comparative Example 2 had high degree of hydrogenation of olefin and not acid-modified, so that large amount of the unreacted maleic anhydride remained, , and also, did not have the specific composition; thus, the odor evaluation was low. The modified hydrocarbon resins for Comparative Examples 3 and 4 did not have the specific composition and thus the odor evaluation was low and the color tones thereof were inferior. The modified hydrocarbon resin for Comparative Example 5 had high degree of hydrogenation of olefin, and large amount of the unreacted maleic anhydride remained; thus, the odor evaluation was low.

On the other hand, the modified hydrocarbon resins for Examples 1 to 4 were those further acid-modifying the resin formed by hydrogenating the hydrocarbon resin having the specific composition, and the degree of hydrogenation of olefin was within the specific range; thus, they had low odor, excellent color tone, and excellent heat resistant hue stability.

## Claims

1. A modified hydrocarbon resin **characterized by** being formed by introducing a carboxyl group or an acid anhydride group derived from an unsaturated carboxylic acid or an unsaturated dicarboxylic acid anhydride into a resin formed by hydrogenating a hydrocarbon resin comprising:
a 1,3-pentadiene monomeric unit of 20 mass% to 70 mass%;
a C₄₋₆ alicyclic monoolefin monomeric unit of 10 mass% to 40 mass%;
a C₄₋₈ acyclic monoolefin monomeric unit of 5 mass% to 30 mass%;
an alicyclic diolefin monomeric unit of 0 mass% to 1 mass%; and
an aromatic monoolefin monomeric unit of 0 mass% to 40 mass%; wherein
a degree of hydrogenation of the olefins is within a range of 0.1% to 50%.

2. The modified hydrocarbon resin according to claim 1, **characterized in that**
a weight average molecular weight (Mw) is within a range of 1,000 to 4,000;
a Z-average molecular weight (Mz) is within a range of 1,500 to 10,000;
a ratio (Mz/Mw) of the Z-average molecular weight to the weight-average molecular weight is within a range of 1.5 to 2.5;
a Gardner color scale measured according to JIS K 0071-2 of a toluene solution of 50 mass% is 5 or lower;
a softening point is 30°C or more; and
an acid value is 0.5 to 20 KOHmg/g.

3. The modified hydrocarbon resin according to claim 1 or 2, **characterized in that** the unsaturated dicarboxylic acid anhydride is a maleic anhydride.

4. The modified hydrocarbon resin according to any one of claims 1 to 3, **characterized in that** a content of the unsaturated carboxylic acid and the unsaturated dicarboxylic acid anhydride unreacted is 3000 ppm or lower.

## Patentansprüche

1. Modifiziertes Kohlenwasserstoffharz, **dadurch gekennzeichnet, dass** es durch Einführen einer Carboxylgruppe oder einer Säureanhydridgruppe, die von einer ungesättigten Carbonsäure oder einem ungesättigten Dicarbonsäureanhydrid abgeleitet ist, in ein Harz gebildet wird, das durch Hydrieren eines Kohlenwasserstoffharzes gebildet wird, das umfasst:
eine 1,3-Pentadien-Monomereinheit von 20 bis 70 Masse-%;
eine alicyclische monoolefinische C₄₋₆-Monomereinheit von 10 Masse-% bis 40 Masse-%;
eine acyclische Monoolefin-C₄₋₈-Monomereinheit von 5 Masse-% bis 30 Masse-%;
eine alicyclische Diolefin-Monomereinheit von 0 Masse-% bis 1 Masse-%; und
eine aromatische monoolefinische Monomereinheit von 0 Masse-% bis 40 Masse-%, wobei
ein Hydrierungsgrad der Olefine im Bereich von 0,1 % bis 50 % liegt.

2. Modifiziertes Kohlenwasserstoffharz nach Anspruch 1, **dadurch gekennzeichnet, dass**
ein gewichtsmittleres Molekulargewicht (Mw) in einem Bereich von 1.000 bis 4.000 liegt;
ein Z-mittleres Molekulargewicht (Mz) im Bereich von 1.500 bis 10.000 liegt;
ein Verhältnis (Mz/Mw) zwischen dem Z-mittleren Molekulargewicht und dem gewichtsmittleren Molekulargewicht im Bereich von 1,5 bis 2,5 liegt;
eine Gardner-Farbskala, gemessen nach JIS K 0071-2, einer Toluollösung mit 50 Massenprozent 5 oder weniger beträgt;
ein Erweichungspunkt von 30 °C oder mehr beträgt; und
eine Säurezahl von 0,5 bis 20 KOHmg/g ist.

3. Modifiziertes Kohlenwasserstoffharz nach Anspruch 1 oder 2, **dadurch gekennzeichnet, dass** das ungesättigte Dicarbonsäureanhydrid ein Maleinsäureanhydrid ist.

4. Modifiziertes Kohlenwasserstoffharz nach einem der Ansprüche 1 bis 3, **dadurch gekennzeichnet, dass** der Gehalt an nicht umgesetzter ungesättigter Carbonsäure und ungesättigtem Dicarbonsäureanhydrid 3000 ppm oder weniger beträgt.

## Revendications

1. Résine hydrocarbonée modifiée **caractérisée par le fait qu'**elle est formée par l'introduction d'un groupe carboxyle ou d'un groupe anhydride d'acide dérivé d'un acide carboxylique insaturé ou d'un anhydride d'acide dicarboxylique insaturé dans une résine formée par l'hydrogénation d'une résine hydrocarbonée comprenant :
une unité monomérique de 1,3-pentadiène de 20 à 70 % en masse ;
une unité monomérique de monooléfine alicyclique C₄₋₆ de 10 % à 40 % en masse ;
une unité monomérique de monooléfine acyclique C₄₋₈ de 5 à 30 % en masse ;
une unité monomérique de dioléfine alicyclique de 0 à 1 % en masse ; et
une unité monomérique de monooléfine aromatique de 0 à 40 % en masse ; dans laquelle
le degré d'hydrogénation des oléfines est compris entre 0,1 % et 50 %.

2. Résine hydrocarbonée modifiée selon la revendication 1, **caractérisée par le fait que**
une masse moléculaire moyenne en poids (Mw) est comprise entre 1 000 et 4 000 ;
une masse moléculaire moyen en Z (Mz) est compris entre 1 500 et 10 000 ;
le rapport (Mz/Mw) entre la masse moléculaire moyenne en Z et la masse moléculaire moyenne en poids est compris entre 1,5 et 2,5 ;
une échelle de couleurs Gardner mesurée selon la norme JIS K 0071-2 d'une solution de toluène à 50 % en masse est inférieure ou égale à 5 ;
un point de ramollissement est de 30 °C ou plus ; et
l'indice d'acidité est compris entre 0,5 et 20 KOHmg/g.

3. Résine hydrocarbonée modifiée selon la revendication 1 ou 2, **caractérisée par le fait que** l'anhydride d'acide dicarboxylique insaturé est un anhydride maléique.

4. Résine hydrocarbonée modifiée selon l'une quelconque des revendications 1 à 3, **caractérisée par le fait que** la teneur en acide carboxylique insaturé et en anhydride d'acide dicarboxylique insaturé n'ayant pas réagi est inférieure ou égale à 3 000 ppm.
